# EUROPÄISCHE PATENTSCHRIFT

(11) **EP 0 528 162 B1**
(45) Veröffentlichungstag und Bekanntmachung des Hinweises auf die Patenterteilung: **14.12.1994**
(21) Anmeldenummer: 92111666.1
(22) Anmeldetag: 09.07.1992
(51) Int. Cl.: B60G 7/02

(54) **Hilfsrahmen für eine Radaufhängung eines Kraftfahrzeugs**
Auxiliary chassis for the suspension of a motor vehicle
Chassis auxiliaire pour suspension de véhicule à moteur

(30) Priorität: 16.08.1991 DE 4127037
(43) Veröffentlichungstag der Anmeldung: 24.02.1993
(73) Patentinhaber: Dr.Ing.h.c. F. Porsche Aktiengesellschaft, 70435 Stuttgart (DE)
(72) Erfinder: Kunert, Reinhard, W-7251 Weissach-Flacht (DE)

(56) Entgegenhaltungen:
- EP-A- 0 036 845
- EP-A- 0 306 046
- DE-A- 2 536 060
- DE-B- 1 951 271
- FR-A- 2 614 000

## Beschreibung

Die Erfindung bezieht sich auf einen Hilfsrahmen für eine Radaufhangung eines Kraftfahrzeugs nach dem Oberbegriff des Anspruchs 1.

Aus der DE-OS 24 40 494 ist ein Tragrahmen für eine Radaufhängung eines Fahrzeugs bekannt, der am Fahrzeugaufbau befestigt ist und Lageraufnahmen für Radführungslenker umfasst. Dieser Tragrahmen besteht aus einem quer im Fahrzeug ausgerichteten Träger, der jeweils endseitig zwei Lenkerlager für eine Schräglenkerachse aufnimmt. Ein weitere Ausführung eines Hilfsrahmens für eine Radaufhängung (DE-A 25 36 060) beteht aus einem einteiligen U-förmigen Träger, der am Fahrzeugaufbau befestigt ist, wobei die Verbindung des Lenkerlagers zum Fahrzeugaufbau über eine gleiche Befestigungsschraube des Hilfsrahmens erfolgt. Aus der DE-B 19 51 271 ist ein Hilfsrahmen einer Radaufhängung nach dem Oberbegriff des Anspruchs 1 bekannt, der zwei Querträger umfaßt, die aufliegend miteinander verbunden sind und zwischen sich Lagerungen für Wellen einer Radaufhängung aufweisen.

Aufgabe der Erfindung ist es, einen leichtgewichtigen Hilfsrahmen für eine Radaufhängung zu schaffen, der in einfacher Bauweise mit verringertem konstruktivem Aufwand ausgebildet ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß der Aufwand der Verbindungen zu den Lenkerlagern und dem zweigeteilten Hilfsrahmen herabgesetzt wird, da zusätzliche Verbindungen der beiden Teile des Hilfsrahmens entfallen. So wird in vorteilhafter Weise eine Befestigung eines ersten Querträgers an einem zweiten Querträger des Rahmens zur Aufnahme eines Lenkerlagers für einen Radführungslenker genutzt, wodurch zusätzliche schwergewichtige Lageraufnahmen am Hilfsrahmen entfallen können.

So wird zur Aufnahme des einen Lenkerlagers ein Spalt zwischen den beiden zu verbindenden Querträgern verwendet, um das Lager an seinen beiden Stirnseiten über parallele Tragflächen abzustützen. Der Spalt wird vorzugsweise zwischen einem vom Schenkel abgehenden Arm des einen Querträgers und einem Ansatz von einem weiteren Querträger gebildet, wobei der Arm gleichzeitig im Abstand zum Lager mit dem weiteren Querträger über eine Befestigungsschraube verbunden ist. Mit dieser Schraube ist ein weiteres Lenkerlager eines Radführungslenkers verbunden, das außenseitig des einen Querträgers angeordnet ist, wodurch der Aufwand einer zusätzlichen Befestigungsschraube neben einer Halteschraube für das Lager in vorteilhafter Weise vermieden wird.

Mit dem einen Querträger ist ein Stabilisator-Lagerbock über zwei Befestigungsschrauben verbunden, wobei die eine Befestigungsschraube ein drittes Lenkerlager aufnimmt, das zwischen dem Querträger und einem Schenkel des Lagerbocks angeordnet ist. Dieser das Lenkerlager haltende Bolzen umfasst ein Exzenter-Einstellelement, mit dem der Nachlauf des Rades eingestellt wird.

Ein Ausführungsbeispiel der Erfindung ist in der Zeichnung dargestellt und wird im folgenden näher beschrieben.
Es zeigen
- Fig. 1: eine Draufsicht auf einen Hilfsrahmen mit Lenkerlagerungen,

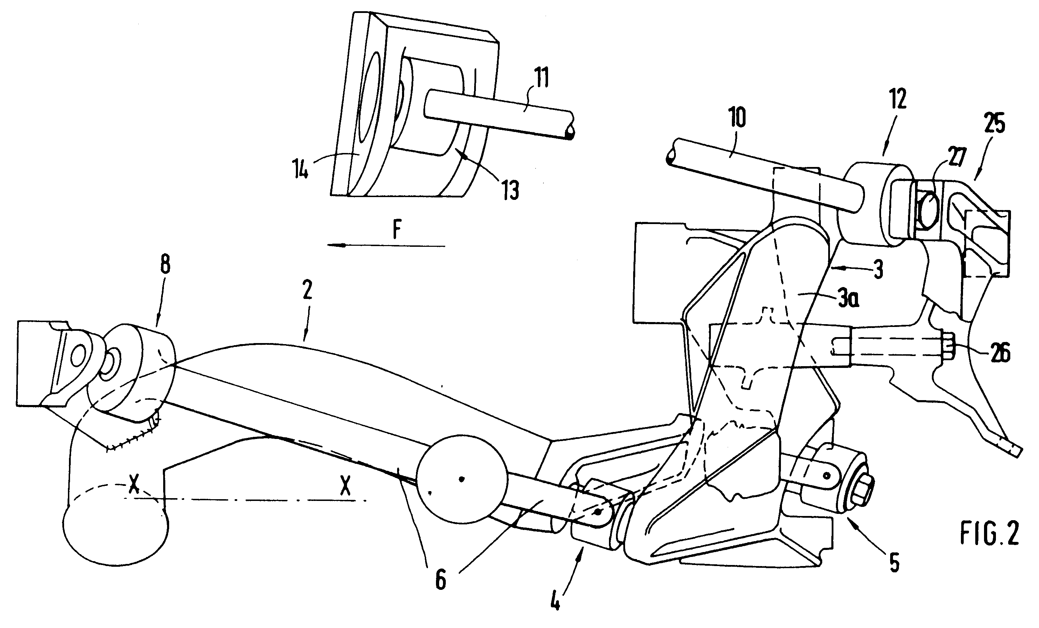

- Fig. 2: eine Seitenansicht des Hilfsrahmens nach Fig. 1,
- Fig. 3: eine Draufsicht auf ein Exzenter-Einstellelement,
- Fig. 4: eine Ansicht des Exzenter-Einstellelements, in Pfeilrichtung X der Fig. 3 gesehen.

Der Hilfsrahmen 1 für eine Radaufhängung, insbesondere für eine Hinterradaufhängung in Mehrlenkerbauweise umfasst einen ersten vorderen Querträger 2, der mit einem zweiten hinteren Querträger 3 - in bezug auf die Fahrtrichtung F - zu einer Festigkeitseinheit verbunden und am Fahrzeugaufbau über mehrere Lager befestigt ist.

Am Hilfsrahmen 1 sind Lager 4 und 8 für einen unteren Querlenker 6 sowie ein Lager 5 für eine Spurstange 7 gehalten.

Die obere Anbindung der Radaufhängung wird von zwei Lenkern 10 und 11 mit den Lagern 12 und 13 gebildet, wobei das Lager 12 am Hilfsrahmen 1 und das Lager 13 am Fahrzeugaufbau 14 vorgesehen ist.

Der vordere Querträger 2 ist U-förmig mit von einem querverlaufenden Tragteil 2a abgehenden Schenkeln 2b ausgebildet und erstreckt sich etwa in einer horizontalen Ebene X-X. Der hintere Querträger 3 weist endseitige Säulen 3a auf, die sich von einem querverlaufenden Tragteil 3b, das etwa in einer gleichen Ebene X-X mit dem vorderen Querträger 2 liegt, vertikal nach oben - in bezug auf die Ebene X-X - erstrecken.

Die beiden Querträger 2 und 3 des Hilfsrahmens 1 sind über Befestigungsbolzen 16, 17 an jeder Seite miteinander verbunden, die auch gleichzeitig zur Befestigung der Lager 4 und 5 für die Lenker 6 und 7 dienen.

Das Lager 4 des Lenkers 6 ist in einem zwischen vom Schenkel 2b abgehenden Armen 2c des vorderen Querträgers 2 und dem hinteren Querträger 3 gebildeten Spalt 18 eingepasst und über den Bolzen 16 gehalten, der gleichzeitig die beiden Querträger 2 und 3 miteinander verbindet.

Der Spalt 18 zur Aufnahme des Lagers 4 wird von parallelen Flächen 21, 22 begrenzt, denen Stirnflächen des Lagers 4 entsprechend gegenüberstehen. Die durch den Bolzen 16 gebildete Schwenkachse verläuft unter einem stumpfen Winkel zum Schenkel 2b des ersten Querträgers 2.

Gleichzeitig ist der Querträger 2 über den vom Schenkel 2b abgebogenen Arm 2c mit dem querverlaufenden Tragteil 3b des Querträgers 3 über den weiteren Bolzen 17 verbunden. Dieser trägt endseitig das Lager 5 für den Lenker 7, das außenanliegend des Tragteils 3b angeordnet ist. Der Bolzen 17 kann über ein mit dem Tragteil 3b verbundenen Schließblech 17a gehalten sein.

Somit sind über die beiden Bolzen 16 und 17 jeder Seite des Hilfsrahmens 1 die Querträger 2 und 3 miteinander verbunden und gleichzeitig sind die Lager 4, 5 am Hilfsrahmen 1 festgesetzt.

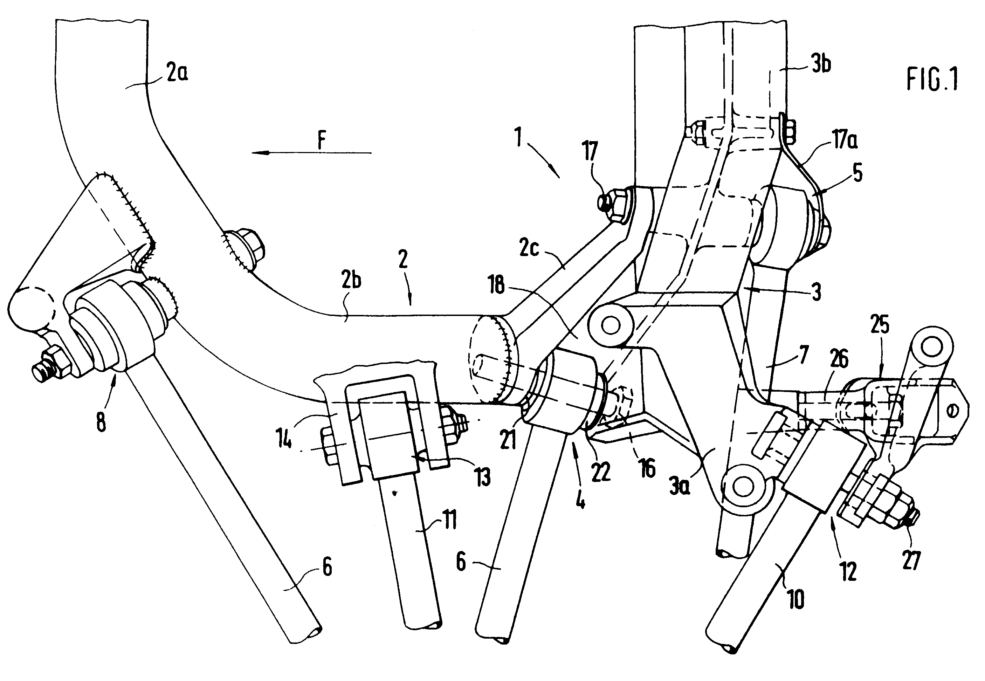

Wie Fig. 1 näher zeigt, ist mit der Säule 3a des Querträgers 3 ein Stabilisator-Lagerbock 25 mittels Befestigungsbolzen 26, 27 verbunden. Der Bolzen 27 trägt gleichzeitig das Lager 12 für den oberen Lenker 10, so daß eine separate Befestigung des Lagers 12 bzw. des Lagerbocks 25 entfällt.

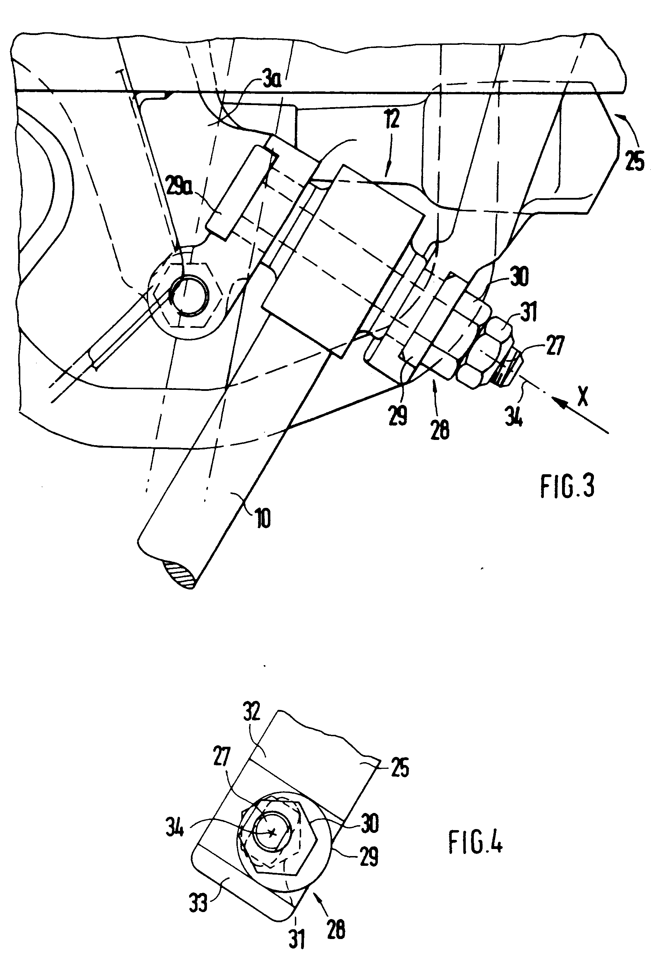

Nach einer weiteren Ausführung gemäß der Fig. 3 und 4 ist der Befestigungsbolzen 27 mit einem Exzenter-Einstellelement 28 versehen. Dies umfasst eine Exzenterscheibe 29 mit Sechskant 30, die drehfest mit der Schraube 27 verbunden ist, deren endseitiger Kopf von einer zweiten Exzenterscheibe 29a gebildet wird, die in einer Nut mit seitlichen Rampen angeorndet ist. Der Sechskant 30 kann um die Exzentrizität e1 zur Bolzenachse 34 versetzt sein, um die Exzenterscheibe 29 kleiner und somit leichter gestalten zu können. Eine Sicherung der Bolzenverbindung erfolgt über eine Befestigungsmutter 31. Zum Verstellen des Rades wird die Exzenterscheibe 29 über den Sechskant 30 zwischen Begrenzungen 32 und 33 des Lagerbocks 25 verdreht, so daß die Bolzenachse 34 eine Verlagerung und somit das Rad eine Verstellung erfährt. Diese Anordnung hat den Vorteil, daß Einstellung und Sicherung der Schraubverbindung von einer äußeren Seite her erfolgt, insbesondere wenn der Zugang zum endseitigen Kopf der Schraube 27 nicht möglich ist.

## Patentansprüche

1. Hilfsrahmen einer Radaufhängung eines Kraftfahrzeugs, der am Fahrzeugaufbau befestigt ist und Lageraufnahmen für Lenker der Radaufhängung umfasst, wobei der Hilfsrahmen (1) zweiteilig ausgebildet ist und einen ersten Querträger (2) umfasst, der mit einem zweiten Querträger (3) über Befestigungsbolzen (16, 17) verbunden ist, die gleichzeitig zur Befestigung von Lenkerlagern (4, 5) am Hilfsrahmen (1) dienen, **dadurch gekennzeichnet,** daß der erste Querträger (2) mit von einem Tragteil (2a) abgebogenen Schenkeln (2b) ausgebildet ist, die jeweils über einen Befestigungsbolzen (17) unmittelbar mit dem zweiten Querträger (3) und jeweils über einen weiteren Bolzen (16) unter Zwischenschaltung eines Lenkerlagers (4) mit dem zweiten Querträger verbunden sind.

2. Hilfsrahmen nach Anspruch 1, **dadurch gekennzeichnet**, daß das Lenkerlager (4) zwischen einen vom Schenkel (2b) des ersten Querträgers (2) zum zweiten Querträger (3) gebildeten Spalt (18) angeordnet ist, der von den den Stirnflächen des Lenkerlagers (4) gegenüberstehenden parallelen Flächen (21, 22) begrenzt ist.

3. Hilfsrahmen nach Anspruch 2, **dadurch gekennzeichnet**, daß die abgebogenen Schenkel (2b) des ersten Querträgers (2) jeweils einen abgewinkelten Arm (2c) umfassen, der an seinem freien Ende über den einen Befestigungsbolzen (17) mit dem zweiten Querträger (3) verbunden ist und im Übergangsbereich vom Schenkel (2b) zum Arm (2c) die eine parallele Fläche (21) gebildet ist.

4. Hilfsrahmen nach Anspruch 1, **dadurch gekennzeichnet**, daß die durch einen Bolzen (16) gebildete Schwenkachse des Lenkerlagers (4) unter einem stumpfen Winkel zum Schenkel (2b) des ersten Querträgers (2) angestellt ist.

5. Hilfsrahmen nach Anspruch 3, **dadurch gekennzeichnet**, daß mit dem Befestigungsbolzen (17) zwischen dem Arm (2c) am Schenkel (2b) des ersten Querträgers (2) und dem zweiten Querträger (3) gleichzeitig ein weiteres Lenkerlager (5) an der Außenseite des zweiten Querträgers (3) gehalten ist.

6. Hilfsrahmen nach Anspruch 5, **dadurch gekennzeichnet,** daß der Befestigungsbolzen (17) am Arm (2c) befestigt ist und außenseitig am Lager (5) über ein Schließblech (17a) gehalten wird, das mit dem Tragteil (3b) verbunden ist.

7. Hilfsrahmen nach Anspruch 1, **dadurch gekennzeichnet**, daß an einer Säule (3a) des zweiten Querträgers (3) ein weiteres Lenkerlager (12) zwischen dieser und einem Stabilisator-Lagerbock (25) über einen Befestigungsbolzen (27) am Querträger (3) gehalten ist, wobei etwa vertikal beabstandet zu diesem Befestigungsbolzen (27) ein weiterer Befestigungsbolzen (26) am Querträger (3) befestigt wird.

8. Hilfsrahmen nach Anspruch 7, **dadurch gekennzeichnet**, daß an der Säule (3a) ein Lenkerlager (12) über einen Befestigungsbolzen (27) gehalten ist, der ein Exzentereinstellelement (28) bildet, das eine auf dem Bolzen (27) angeordnete Exzenterscheibe (29) mit verbundener Sechskantmutter (30) aufweist und die Scheibe (29) zwischen Begrenzungen (32, 33) am Lagerbock (25) gehalten ist.

9. Hilfsrahmen nach Anspruch 8, **dadurch gekennzeichnet,** daß der Befestigungsbolzen (27) des Lenkerlagers (12) einen Kopf mit einer Exzenterscheibe (29a) aufweist, die in einer Nut mit seitlichen Rampen angeordnet ist.

## Claims

1. A subframe of a wheel suspension of a motor vehicle, secured to the vehicle body and comprising bearing mountings for support arms of the wheel suspension, wherein the subframe (1) is constructed in two parts and comprises a first transverse support (2) connected to a second transverse support (3) by way of fastening pins (16, 17) used at the same time for securing support-arm bearings (4, 5) to the subframe (1), **characterized in that** the first transverse support (2) is formed with legs (2b) bent away from a support part (2a) and each directly connected to the second transverse support (3) by way of a fastening pin (17) and each connected to the second transverse support by way of a further pin (16) with the interposition of a support-arm bearing (4).

2. A subframe according to Claim 1, **characterized in that** the support-arm bearing (4) is arranged in a gap (18) formed by the leg (2b) of the first transverse support (2) and the second transverse support (3) and bounded by the parallel faces (21, 22) opposing the front faces of the support-arm bearing (4).

3. A subframe according to Claim 2, **characterized in that** the bent legs (2b) of the first transverse support (2) each include an angled arm (2c) connected at the free end thereof to the second transverse support (3) by way of one fastening pin (17), and one parallel face (21) is formed in the transition area from the leg (2b) to the arm (2c).

4. A subframe according to Claim 1, **characterized in that** the pivot shaft of the support-arm bearing (4) formed by a pin (16) is set at an obtuse angle to the leg (2b) of the first transverse support (2).

5. A subframe according to Claim 3, **characterized in that** a further support-arm bearing (5) is held at the same time on the outside of the second transverse support (3) by the fastening pin (17) between the arm (2c) on the leg (2b) of the first transverse support (2) and the second transverse support (3).

6. A subframe according to Claim 5, **characterized in that** the fastening pin (17) is secured to the arm (2c) and is held externally on the bearing (5) by way of a closure plate (17a) connected to the support part (3b).

7. A subframe according to Claim 1, **characterized in that** a further support-arm bearing (12) is held on a column (3a) of the second transverse support (3) between the said column (3a) and a stabilizer bearing bracket (25) by way of a fastening pin (27) on the transverse support (3), wherein a further fastening pin (26) is secured to the transverse support (3) at a vertical distance from the said fastening pin (27).

8. A subframe according to Claim 7, **characterized in that** a support-arm bearing (12) is held on the column (3a) by way of a fastening pin (27) forming an eccentric adjustment member (28) comprising an eccentric washer (29) arranged on the pin (27) and having an hexagonal nut (30) connected thereto, and the washer (29) is held between limits (32, 33) on the bearing bracket (25).

9. A subframe according to Claim 8, **characterized in that** the fastening pin (27) of the support-arm bearing (12) comprises a head with an eccentric washer (29a) arranged in a groove with side slopes.

## Revendications

1. Châssis auxiliaire pour suspension de véhicule à moteur, qui est fixé à la carrosserie du véhicule et qui comprend des éléments de réception pour les paliers à bielles de la suspension, le châssis auxiliaire (1) étant constitué en deux parties et comprenant un premier support transversal (2) qui est relié à un second support transversal (3) par des boulons de fixation (16, 17) qui servent simultanément à la fixation des paliers à bielles (4, 5) sur le châssis auxiliaire (1), caractérisé en ce que le premier support transversal (2) est constitué par des branches (2b) repliées à partir d'une partie de support (2a), qui sont respectivement reliées par un boulon de fixation (17) directement au second support transversal (3) et par un autre boulon (16) au second support transversal avec interposition d'un palier à bielle (4).

2. Châssis auxiliaire selon la revendication 1, caractérisé en ce que le palier à bielle (4) est disposé dans une interstice (18) formé entre la branche (2b) du premier support transversal (2) et le second support transversal (3), qui est limité par des surfaces parallèles (21, 22) qui sont face aux surfaces frontales du palier à bielle (4).

3. Châssis auxiliaire selon la revendication 2, caractérisé en ce que les branches repliées (2b) du premier support transversal (2) comprennent chacune un bras coudé (2c) qui est relié à son extrémité libre au second support transversal (3) par un boulon de fixation (17) et est constitué dans la région de transition entre la branche (2b) et le bras (2c) par une surface parallèle (21).

4. Châssis auxiliaire selon la revendication 1, caractérisé en ce que l'axe de pivotement du palier à bielle (4) formé par un boulon (16) forme un angle obus avec la branche (2b) du premier support transversal (2).

5. Châssis auxiliaire selon la revendication 3, caractérisé en ce qu'un autre palier à bielle (5) est simultanément fixé sur le côté externe du second support transversal (3) par le boulon de fixation (17) entre le bras (2c) de la branche (2b) du premier support transversal (2) et le second support transversal (3).

6. Châssis auxiliaire selon la revendication 5, caractérisé en ce que le boulon de fixation (17) est fixé sur le bras (2c) et est maintenu sur le côté extérieur du palier (5) par une têtière (17a) qui est reliée à la partie de support (3b).

7. Châssis auxiliaire selon la revendication 1, caractérisé en ce qu'un autre palier à bielle (12) est maintenu sur une colonne (3a) du second support transversal (3) entre ce dernier et un support stabilisateur (25) par l'intermédiaire d'un boulon de fixation (27), un autre boulon de fixation (26) étant fixé au support transversal (3) en étant orientré sensiblement verticalement par rapport à ce boulon de fixation (27).

8. Châssis auxiliaire selon la revendication 7, caractérisé en ce qu'un palier à bielle (12) est fixé par un boulon de fixation (27) sur la colonne (3a), boulon qui forme un élément excentrique qui comprend un disque excentrique (29) avec un écrou à six pans (30) qui lui est relié et qui est disposé sur le boulon (27), et le disque (29) est maintenu sur le palier (25) entre des butées limites (32, 33).

9. Châssis auxiliaire selon la revendication 8, caractérisé en ce que le boulon de fixation (27) du palier à bielle (12) comprend une tête avec un disque excentrique (29a), qui est disposé dans une rainure à rampes latérales.
